# EUROPEAN PATENT SPECIFICATION

(11) **EP 0 602 590 B1**
(45) Date of publication and mention of the grant of the patent: **16.04.1997**
(21) Application number: 93120126.3
(22) Date of filing: 14.12.1993
(51) Int. Cl.: B62K 19/46, B62J 15/00

(54) **Rear fender for motor-bicyle**
Hinterer Kotflügel für Motorrad
Garde-boue arrière pour motocyclette

(30) Priority: 17.12.1992 JP 354781/92
(43) Date of publication of application: 22.06.1994
(73) Proprietor: HONDA GIKEN KOGYO KABUSHIKI KAISHA, Minato-ku Tokyo (JP)
(72) Inventor: Yamaguchi, Takashi c/oK.K. Honda Gijutsu Kenkyusho, Wako-shi, Saitama (JP)
(74) Representative: Liska, Horst, Dr.-Ing.

(56) References cited:
- GB-A- 660 080
- GB-A- 717 154
- JP-U- 1 161 888
- PATENT ABSTRACTS OF JAPAN vol. 17, no. 430 (M-1460)10 August 1993 & JP-A-05 092 784 (SUZUKI MOTOR CORP.) 16 April 1993

## Description

### Detailed Description of the Invention

### Applicable Industrial Field

The present invention relates to a rear fender for a motor-bicycle which is formed integrally with a container and is dividable in the longitudinal direction.

### Prior Art

Japanese utility Model Laid-open No. HEI 1-161888 shows a rear fender for a motor-bicycle dividable in the longitudinal direction. The rear fender is formed integrally with a battery box as a container at a front end portion, and includes a curved surface opposed to the upper portion of a rear wheel outer periphery as a fender portion, wherein the fender portion is divided in the longitudinal direction at the portion near the upper end portion of the rear wheel equivalent to an approximately intermediate portion.

### Problem to be Solved by the Invention

In general, a fender portion has a fear to be damaged through the collision of a small stone jumped by a rear wheel during running, which often brings about the necessity of the exchange of the rear fender. However, when the front half side of the fender portion is required to be exchanged in the above structure, the battery box being relatively less susceptible to damage must be also exchanged as one-body. This is uneconomical.

On the contrary, when only the battery box is damaged by any cause, the fender portion must be exchanged as one-body. This is similarly uneconomical. The same is true for the common container, the application of which is not limited to the battery box. Accordingly, an object of the present invention is to solve the above problem.

### Means for Solving the Problem

To solve the above problem, according to the present invention, there is provided a rear fender for a motor-bicycle according to claim 1.

### Function of the Invention

Since the fender portion includes the whole length of the curved surface, the rear fender is divided in the container portion and the fender portion, so that a portion relatively susceptible to damage is separated from a portion relatively less susceptible to damage. Thus, when the fender portion is damaged, only the fender portion is exchanged while leaving the container portion.

One embodiment will be described with reference to Figs. 1 to 6, wherein:
Fig. 1 is
   a view showing the side surface of essential parts according to the embodiment, with parts being cut-away.
Fig. 2 is
   a side view of essential parts of a vehicular body of a motor-bicycle according to the embodiment.
Fig. 3 is
   an enlarged view of the essential parts of the embodiment taken along the direction of the arrow A of Fig. 1.
Fig. 4 is
   an enlarged view of the essential parts of the embodiment taken along the direction of the arrow B of Fig. 1.
Fig. 5 is
   an exploded view of essential parts in the division portion according to the embodiment, with parts partially cut-away.
Fig. 6 is
   a sectional view taken along the line C-C of Fig. 1.

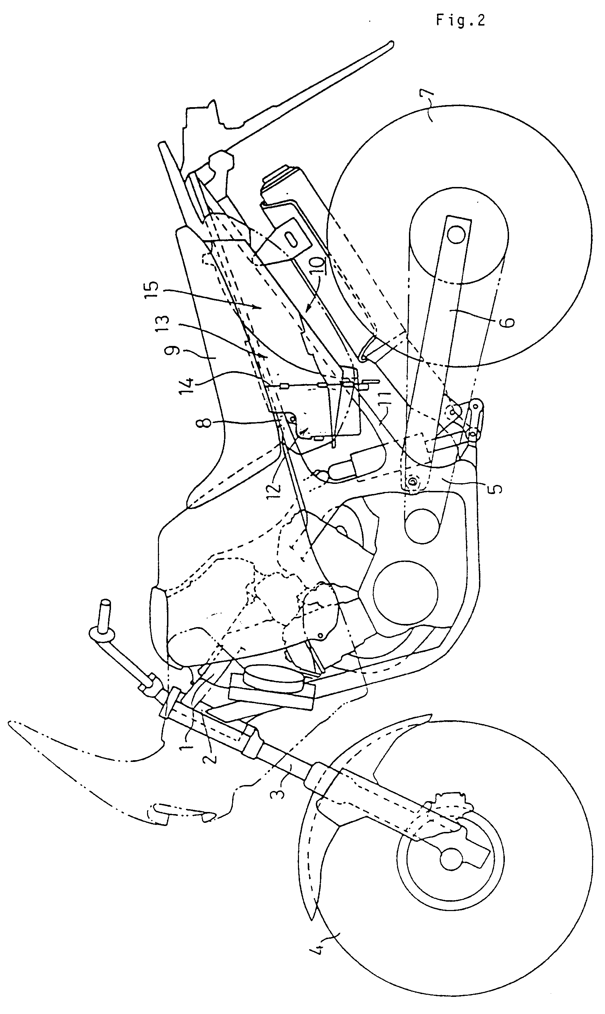

First, Fig. 2 shows shapes of essential parts on the side surface of a motor-bicycle. On the front end portions of a pair of main frames 1 extending in the longitudinal direction, a front fork 3 is supported through a head pipe 2. Further, a front wheel 4 is supported on the lower end portion of the main frames 1.

Pivot frames 5 are coupled to the rear portions of the main frames 2, and a rear wheel 7 is supported on the rear end portions of rear arms 6 pivotably supported at the front ends by the pivot frames 5. A seat 9 is supported on a pair of right and left seat rails 8 extending obliquely, upward and rearward from the rear portions of the main frames 1.

Under the seat 9, a rear fender 10 is supported on the seat rails 8 while crossing the seat rails 8 and a rear stay 11 provided under the seat rails 8.

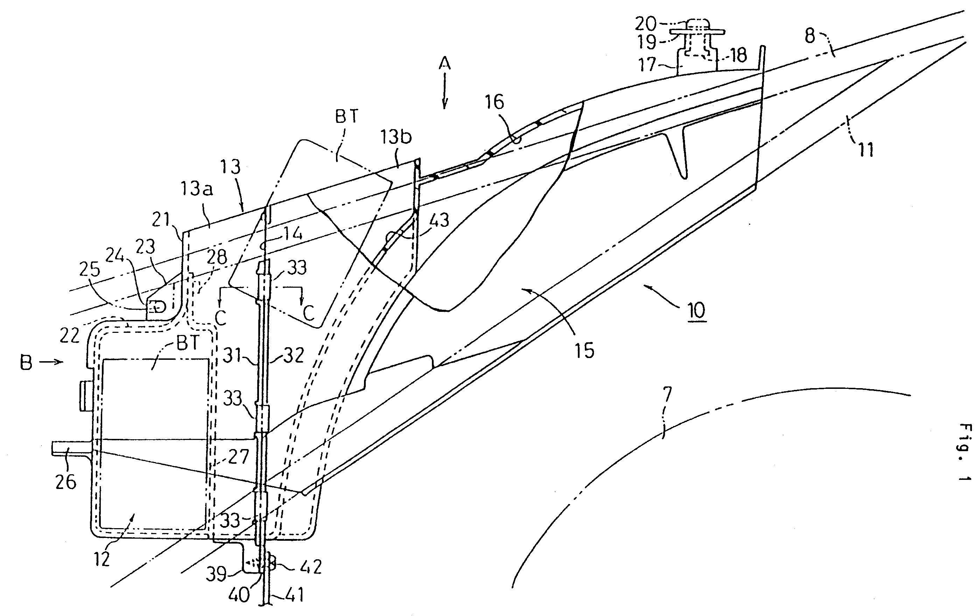

Fig. 1 is a view showing shapes of essential parts on the side surface of the rear fender, with parts being partially cut-away, wherein a battery box 12 is formed at the front end portion of the rear fender 10. A container 13 opened upward is continuously formed in the back of the battery box 12.

The container 13 is divided in the longitudinal direction at a division line 14 of an intermediate portion. A container front portion 13a is integrated with the battery box 12, which constitute the container portion of the present invention. A container rear portion 13b is integrated with a fender portion 15 formed rearwardly of the container front portion 13a, which constitute the front end portion.

The fender portion 15 is a member for covering the outside of the rear wheel 7, and is a portion formed with a curved portion, i.e. a curved surface 16, opposed to the upper portion of the outer periphery of the rear wheel 7. The rear end portion of the fender portion 15 extends up to an uppermost position of the rear wheel 7, and a boss 17 projects upward from the upper portion of the rear end portion, on which an insert nut 18 is provided.

The boss 17 is abutted on a cross plate 19 crossing between the right and left seat rails 8, and the rear end portion of the fender portion 15 is supported on the seat rails 8 side by fastening of a bolt 20 and the insert nut 18.

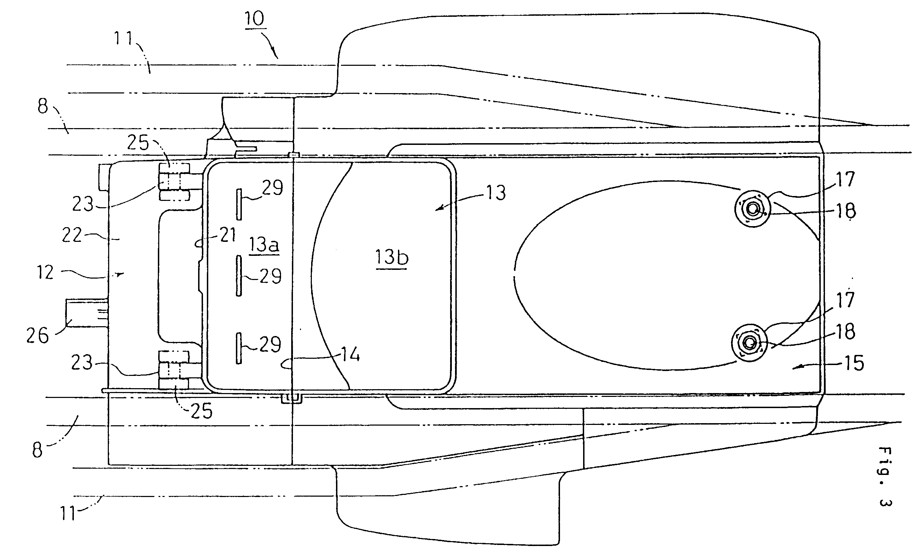

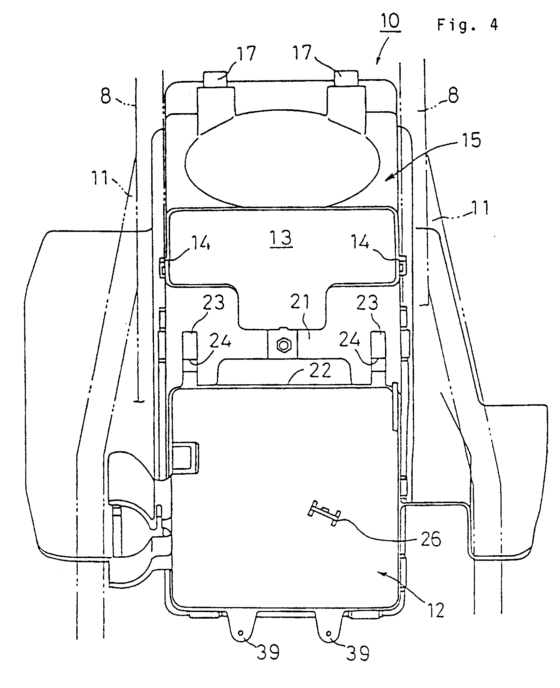

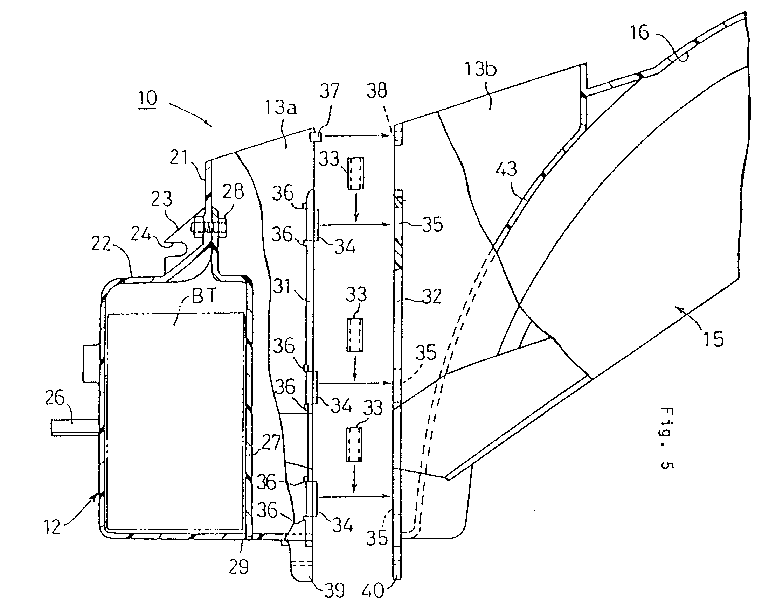

Fig. 3 is a view of the rear fender taken along the direction of the arrow A of Fig. 1; and Fig. 4 is a view of the rear fender taken along the direction of the arrow B of Fig. 1. Fig. 5 is a view showing the state where the container portion including the battery box 12 is separated from the fender portion 15.

In these figures, the battery box 12 projects forward from a front wall 21 of the container front portion 13a, and the upper side of the projection portion is covered with a ceiling portion 22. A pair of right and left hooks 23 are provided on the connection portion between the ceiling portion 22 and the front wall 21.

An engaging groove 24 opened forward in the horizontal direction is provided on the hook 23 (see Figs. 1 and 5), and which is engaged with each of supporting members 25 mounted on the seat rails 8 (see Figs. 1 and 3). Reference numeral 26 indicates a coupling piece provided so as to project forward from the battery box 12.

As is apparent from Fig. 5, the interior of the battery box 12 and the container front portion 13a is partitioned by a pressing plate 27, and a battery BT is contained in a space formed forwardly of the pressing plate 27.

The upper end portion of the pressing plate 27 is mounted to the front wall 21 by means of a bolt/nut 28 and the like. The lower end portion of the pressing plate 27 is inserted in a hole 29 formed on the bottom portion of the boundary portion between the battery box 12 and the container front portion 13a (see Fig. 3, which shows the state where the pressing plate 27 is not mounted).

As is apparent from Figs. 1 and 5, the side surfaces of the rear end portion of the container front portion 13a and the front end portion of the container rear portion 13b are provided with flanges 31 and 32 along the division line 14. The flanges 31 and 32 are connected to each other such that the opposed faces thereof are mated, and which are joined to each other at vertical suitable points along the division line 14 by means of a plurality of clips 33.

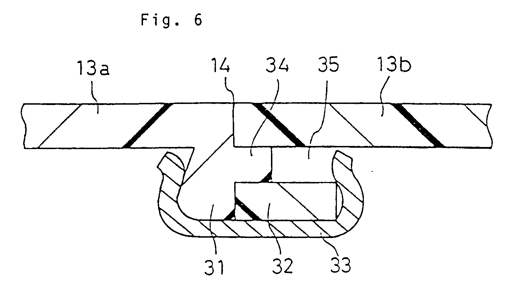

As is apparent from Fig. 6 which is a sectional view taken along the line C-C, a projection 34 projecting to the flange 32 side beyond the division line 14 is formed at each portion of the the flange 31 where the clip 33 is provided. Further, a hole 35 to be fitted with the projection 34 is formed on the flange 32 side.

As the clip 33, a leaf spring approximately C-shaped in section is suitable used. In addition, as is apparent from Fig. 5, a positioning projection 36 for preventing the vertical shift of the clip 33 is formed on each portion of the flange 31 where the clip 33 is provided.

As is apparent from Fig. 5, a projection 37 and a hole 38 to be fitted to each other are respectively formed on the upper end portions of the flange 31 and the flange 32 along the division line 14, while being not the portions where the clips are provided.

As is apparent from Fig. 1, projections 39 and 40 projecting downward are provided on the lower end portions of the flanges 31 and 32 along the division line 14. The projections 39 and 40, and further, the upper end portion of a mud guard 41 are mated and fastened by means of a tapping screw 42, thus being joined integrally to each other.

As is apparent from Figs. 1 and 5, the wall portion 43 comprising the rear portion and the bottom portion of the container rear portion 13b is formed of the front portion of the curved surface portion 16 itself. As shown in Fig. 1, this enables the battery BT to come in and out of the battery box 12 by making slant the battery BT along the curved surface of the wall portion 43. At this time, the pressing plate 27 is previously removed.

Next, the function of the embodiment will be described. When the fender portion 15 must be exchanged due to any cause, first, as shown in Fig. 1, by removing of the bolt 20 which mounts the rear portion of the fender portion 15, the boss 17 is separated from the cross plate 19, and by removing of the hooks 23 from the supporting member 25, the rear fender 10 is removed from the vehicular body.

Subsequently, the clips 33 are removed, the container front portion 13a is separated from the container rear portion 13b at the division line 14, so that the container portion including the battery box 12 is divided from the fender portion 15, which makes it possible to exchange only the fender portion 15 while leaving the container portion.

Accordingly, the fender portion 15 relatively susceptible to damage is separated from a container portion relatively less liable to damage, and are separately exchanged, resulting in the improved economical effect. Further, since the fender portion 15 and the container portion are connected to each other by the clips 33, it is possible to simply and rapidly perform the dividing and re-coupling work.

After that, as shown in Fig. 5, the flange 31 of the remaining container portion and the flange 32 of the exchanged fender portion 15 are mated to each other, and are coupled to each other by fitting of the projections 34 of the flange 31 to the holes 32 of the flange 32, and further, are joined to each other by the clips 33.

Thus, the rear fender 10 comprising the container portion including the buttery box 12 integrated with the new fender portion 15 is formed, which is mounted to the vehicular body in the reversed manner. At this time, since the container portion and the fender portion 15 are previously integrated with each other, it is possible to simply and rapidly perform the mounting work. Further, the same is true for the exchange of the battery box 12 side.

In addition, the present invention is not limited to the above embodiment, and various modifications are possible. For example, the container front portion 13a may be enlarged, and the container rear portion 13b is provided on the fender portion 15 side. Further, the container 13 a, b may be omitted, and the rear fender 10 may be constituted of only the battery box 12 and the fender portion 15. The container different from the battery box 12 and the container 13 may be freely formed on the intermediate portion of the fender portion 15.

### Effect of the Invention

Since the rear fender of a motor-bicycle according to the present invention is divided in the container portion and the fender portion, and the fender portion includes the whole length of the curved surface opposed to the outer periphery of the rear wheel, the portion relatively susceptible to damage is easily separated from the portion relatively less susceptible to damage. Accordingly, in exchange of the fender portion or the container portion, only either the fender portion or the container portion can be exchanged, while the other being left, which is extremely economical.

## Claims

1. A rear fender (10) for a motor-bicycle including a fender portion (15) having a curved surface (16), the whole length of which is adapted to be opposed to the upper portion of a rear wheel (7) outer periphery, and a container (13) at a front end of said fender portion (15), wherein at least a part of said container (13) is dividable from said fender portion (15),
**characterized in that**
a container rear portion (13b) of said container (13) is integrally formed at said front end of said fender portion (15) and that a container front portion (13a) of said container (13) is divided from said container rear portion (13b) along a division line (14) substantially transverse to a longitudinal direction of said fender (10), wherein said container front portion (13a) is releasably connected to said container rear portion (13b).

## Patentansprüche

1. Hinterkotflügel (10) für ein Motorrad, umfassend einen Kotflügelbereich (15) mit einer gekrümmten Fläche (16), deren gesamte Länge dazu ausgelegt ist, dem oberen Bereich des Außenumfangs eines Hinterrads (7) gegenüberzuliegen, und einen Behälter (13) an einem Vorderende des Kotflügelbereichs (15), wobei wenigstens ein Teil des Behälters (13) von dem Kotflügelbereich (15) trennbar ist,
dadurch gekennzeichnet, daß ein hinterer Behälterbereich (13b) des Behälters (13) an dem Vorderende des Kotflügelbereichs (15) integral ausgebildet ist und daß ein vorderer Behälterbereich (13a) des Behälters (13) von dem hinteren Behälterbereich (13b) entlang einer im wesentlichen quer zu einer Längsrichtung des Kotflügels (10) verlaufenden Teilungslinie (14) geteilt ist, wobei der vordere Behälterbereich (13a) mit dem hinteren Behälterbereich (13b) lösbar verbunden ist.

## Revendications

1. Un garde-boue arrière (10) pour motocyclette comprenant une partie garde-boue (15) ayant une surface courbée (16), dont la longueur totale est adaptée pour être opposée a la périphérie extérieure de la partie supérieure d'une roue arrière (7), et un récipient (13) au niveau d'une extrémité, faisant face à ladite partie garde-boue (15), dans lequel au moins une partie dudit récipient (13) est séparable de ladite partie garde-boue (15), caractérisé en ce que
une partie arrière de récipient (13b) dudit récipient (13) est intégralement formée au niveau de ladite extrémité faisant face à ladite partie garde-boue (15), et en ce qu'une partie avant récipient (13a) dudit récipient (13) est séparée de ladite portion arrière récipient (13b) le long d'une ligne de séparation (14) sensiblement transversale à la direction longitudinale dudit garde-boue (10), dans lequel la dite partie avant de récipient (13a) est reliée, de manière désolidarisable, à ladite partie arrière de récipient (13b).
